# EUROPEAN PATENT SPECIFICATION

(11) **EP 1 205 332 B1**
(45) Date of publication and mention of the grant of the patent: **07.04.2004**
(21) Application number: 01125196.4
(22) Date of filing: 24.10.2001
(51) Int. Cl.: B60K 11/04, F28F 9/00

(54) **Radiator for vehicles with replaceable fixing pin**
Fahrzeugkühler mit austauschbarem Befestigungsstift
Radiateur pour véhicules avec cheville de fixation interchangeable

(30) Priority: 10.11.2000 IT TO001054
(43) Date of publication of application: 15.05.2002
(73) Proprietor: DENSO THERMAL SYSTEMS S.p.A., 10046 Poirino (Torino) (IT)
(72) Inventor: Cerrato, Claudia, 10046 Poirino (IT)
(74) Representative: Marchitelli, Mauro

(56) References cited:
- EP-A- 0 870 638
- EP-A- 0 938 990
- FR-A- 2 527 325

## Description

The present invention relates to a radiator for vehicles, comprising at least one collector tank or reservoir made of plastic material which is provided with at least one projecting fixing pin for fixing the radiator to the structure of the vehicle.

The present applicant has found that the vehicles equipped with radiators of the type specified above are frequently subject to failure of the pin or pins for fixing the radiator in the event of frontal impact, even if the impact is of small degree and does not damage the heat-exchange core of the radiator. The said failure of the fixing pin entails the need to replace the entire radiator even if the remaining part of the radiator has remained substantially intact. There result therefrom high costs for repairs due both to the high cost of the component to be replaced (entire radiator) and to the need to empty out the cooling system in order to replace the radiator.

EP-A-0870638 discloses a radiator according to the preamble of claim 1. This document shows a heat exchanger manifold having a fixing peg with a shear line which allows it to break off along a flat surface under impact.

In the event of the peg breaking off, either as a result of a collision or even an impact received on the assembly line, a blind hole is left in the surface of the manifold, allowing it to be fitted with a replacement peg having a self-tapping screw.

A disadvantage of the known solution is that, after the replacement of the original peg by the self-tapping screw, if the vehicle is subjected to a second collision the manifold would break because the self-tapping screw, being made of metal, has a greater resistance than the plastic manifold.

The purpose of the present invention is to provide a radiator of an improved type that makes it possible to overcome the aforesaid drawbacks.

According to the present invention, the above purpose is achieved by a radiator having the characteristics that form the subject of the annexed claims.

The present invention will now be described in detail with reference to the attached drawings, which are provided purely by way of non-limiting example and in which:
- Figure 1 is an exploded perspective view of the end part of a collector tank of a radiator according to the present invention;
- Figure 2 is a perspective view illustrating the part of the radiator of Figure 1 in an assembled condition;
- Figure 3 is a perspective view from a different angle of the component indicated by the arrow III in Figure 1;
- Figure 4 is a sectional view taken along the line IV-IV of Figure 2; and
- Figure 5 is a sectional view taken along the line V-V of Figure 4.

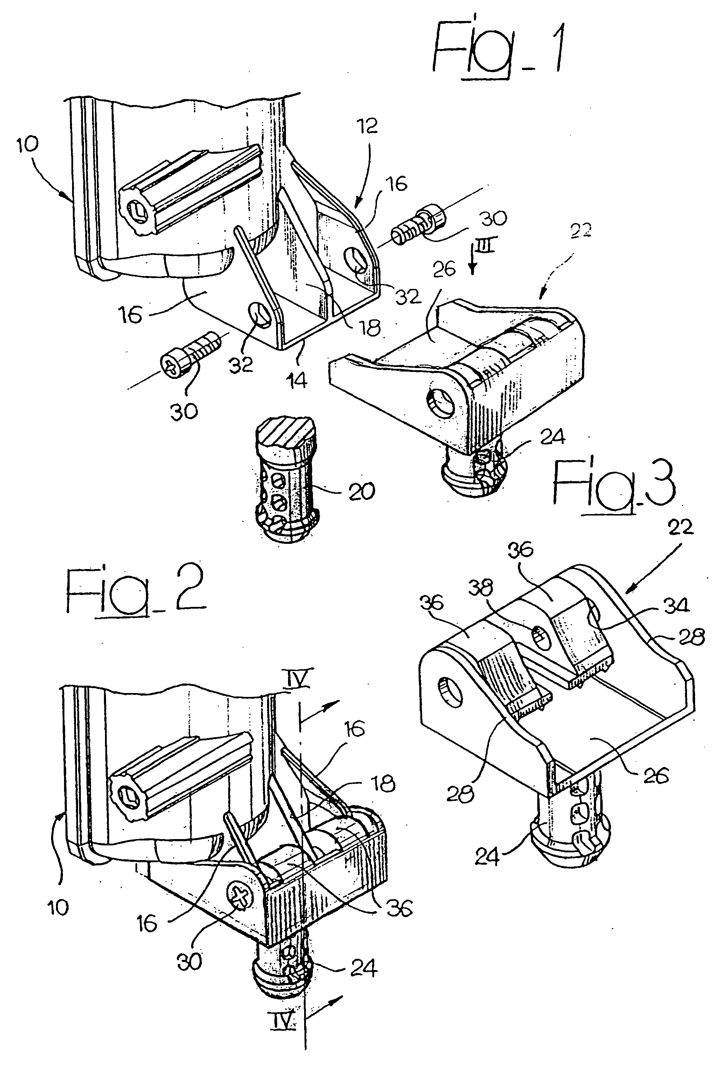

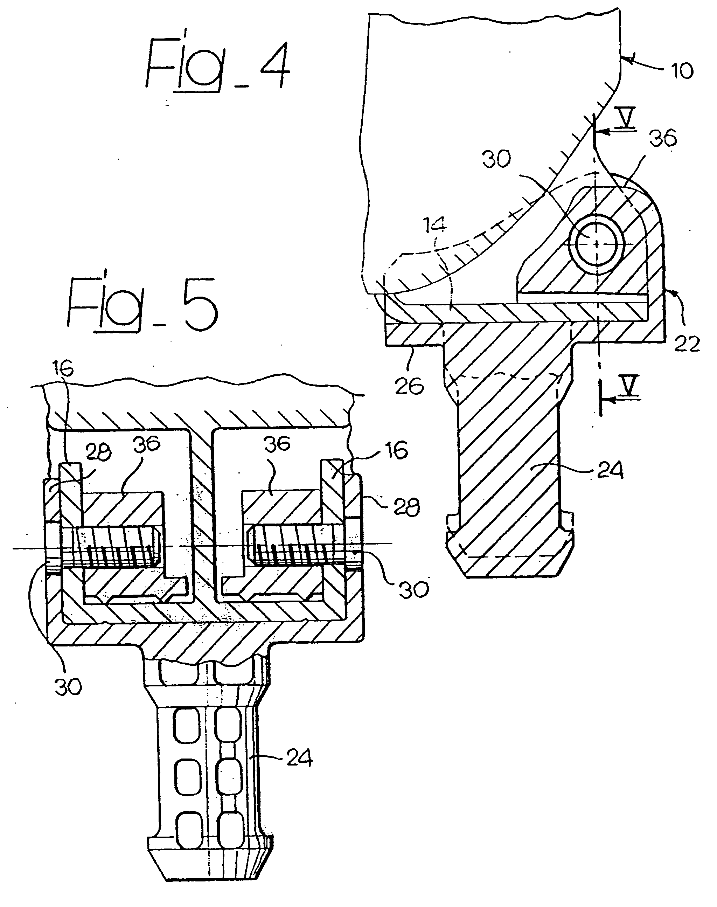

With reference to Figures 1 to 5, the number 10 designates a collector tank or reservoir made of plastic material of a radiator (not illustrated) for vehicles. The collector tank 10 has, at one of its ends, an integral bracket 12 which comprises a bottom wall 14 and is connected to the body of the tank 10 by means of two side walls 16 and a central wall 18, all the aforesaid walls being formed integrally by moulding with the body of the tank 10. A fixing pin 20 is formed integrally with the bracket 12 and protrudes downwards from the bottom wall 14. Figure 1 illustrates the condition in which the pin 20 has been separated from the bracket 12 after the pin broken. Experience shows that failure of the pin 20 caused by a frontal impact of the vehicle always takes place in the proximity of the base of the pin because the maximum bending and shearing stresses caused by the impact concentrate in this area.

According to the present invention, following upon an impact that leads to failure of the pin 20 formed integrally with the tank 10 (without, however damaging the heat-exchange core of the radiator), functionality of the radiator is restored by fixing, on the bracket 12, an auxiliary member 22 provided with an integral pin 24 which, in the fixing position of the auxiliary member 22, substantially assumes the same position as the original pin 20. The auxiliary member 22 comprises a bottom wall 26 which is set facing the bottom wall 14 of the bracket 12, and a pair of side walls 28 which are set laterally on the outside of the side walls 16 of the bracket 12. Preferably, the auxiliary member 22 is fixed to the bracket 12 by means of a pair of screws 30 which extend through respective holes 32, 34 formed, respectively, in the side walls 16, 28. The auxiliary member 22 is preferably equipped with a pair of integral blocks 36 provided with holes 38 inside which threaded portions of the screws engage.

The fixing pin which has broken following upon an impact can be replaced without having to remove the radiator and without having to empty out the cooling system of the vehicle.

## Claims

1. A radiator for vehicles, comprising at least one collector tank or reservoir (10) made of plastic material which is provided with at least one projecting fixing pin (20, 24) for fixing the radiator to the structure of the vehicle, the radiator comprising means (12) for fixing a spare component (22) which replaces said fixing pin (20) in the event of failure of the latter, **characterized in that**:
- the collector tank (10) comprises an integral bracket (12) having a bottom wall (14) and connected to the body of the tank (10) by two side walls (16), a fixing pin (20) being formed integrally with the bracket (12) and protruding from the bottom wall (14),
- said spare component (22) comprises a bottom wall (26) which is set facing the bottom wall (14) and a pair of side walls (28) which are set laterally on the outside of the side walls (16) of the bracket 12, and
- means (30) are provided for fixing the side walls (28) of the spare component (22) to the side walls (16) of the bracket (12).

2. The radiator according to Claim 1, **characterized in that** the spare component (22) is fixed the bracket (12) by means of a pair of screws (30) which extend through respective holes (34, 32) formed, respectively, in the side walls (28) of the spare component and in the side walls (16) of the bracket (12).

3. The radiator according to Claim 2, **characterized in that** the spare component (22) is equipped with a pair of integral blocks (36) provided with holes (38) inside which threaded portions of the screws (30) engage.

## Patentansprüche

1. Fahrzeugkühler mit zumindest einem Sammelbehälter oder Tank (10) aus Kunststoff, der mit zumindest einem vorstehenden Befestigungsstift (20, 24) zum Befestigen des Kühlers am Wagenaufbau versehen ist, wobei der Kühler Mittel (12) zur Befestigung eines Ersatzteils (22) umfasst, das den Befestigungsstift (20) im Falle eines Bruches des letzteren ersetzt,
**dadurch gekennzeichnet, dass**
- der Sammelbehälter (10) einen angeformten Befestigungsträger (12) umfasst, der eine Bodenwand (14) aufweist und durch zwei Seitenwände (16) mit dem Körper des Behälters (10) verbunden ist, wobei ein Befestigungsstift (20) einstückig mit dem Befestigungsträger (12) ausgebildet ist und aus der Bodenwand (14) herausragt,
- das Ersatzteil (22) eine Bodenwand (26) umfasst, die der Bodenwand (14) zugewandt angeordnet ist, und ein paar Seitenwände (28) umfasst, die seitlich auf der Außenseite der Seitenwände (16) des Befestigungsträgers (12) angeordnet sind, und
- Mittel (30) zur Befestigung der Seitenwände (28) des Ersatzteils (22) an den Seitenwänden (16) des Befestigungsträgers (12) vorgesehen sind.

2. Kühler gemäß Anspruch 1, **dadurch gekennzeichnet, dass** das Ersatzteil (22) an dem Befestigungsträger (12) mittels eines Paars Schrauben (30) fixiert ist, die sich durch jeweilige Löcher (34, 32) erstrecken, die jeweils in den Seitenwänden (28) des Ersatzteils und in den Seitenwänden (16) des Befestigungsträgers (12) ausgebildet sind.

3. Kühler gemäß Anspruch 2, **dadurch gekennzeichnet, dass** das Ersatzteil (22) mit einem Paar integrierter Blöcke (36) ausgestattet ist, die mit Löchern (38) versehen sind, in die Gewindeabschnitte der Schrauben (30) eingreifen.

## Revendications

1. Radiateur pour véhicules, comprenant au moins un réservoir collecteur (10) en plastique qui est muni d'au moins une broche de fixation saillante (20, 24) pour fixer le radiateur à la structure du véhicule, le radiateur comprenant des moyens (12) pour fixer un composant de remplacement (22) qui remplace ladite broche de fixation (20) dans le cas d'une cassure de celle-ci, **caractérisé en ce que** :
le réservoir collecteur (10) comprend un support intégré (12) qui a une paroi de fond (14) et qui est connecté au corps du réservoir (10) par deux parois latérales (16), une broche de fixation (20) étant formée intégralement avec le support (12) et formant saillie à partir de la paroi de fond (14),
ledit composant de remplacement (22) comprend une paroi de fond (26) qui est montée faisant face à la paroi de fond (14) et une paire de parois latérales (28) qui sont fixées latéralement sur l'extérieur des parois latérales (16) du support (12), et
des moyens (30) sont prévus pour fixer les parois latérales (28) du composant de remplacement (22) aux parois latérales (16) du support (12).

2. Radiateur selon la revendication 1, **caractérisé en ce que** le composant de remplacement (22) est fixé au support (12) au moyens d'une paire de vis (30) qui s'étendent à travers des trous respectifs (34, 32) formés respectivement dans les parois latérales (28) du composant de remplacement (22) et dans les parois latérales (16) du support (12).

3. Radiateur selon la revendication 2, **caractérisé en ce que** le composant de remplacement (22) est équipé d'une paire d'une paire de blocs intégrés (36) munis de trous (38) à l'intérieur desquels des parties filetées des vis (30) viennent en prise.
